# FASCICULE DE BREVET EUROPEEN

(11) **EP 3 197 657 B1**
(45) Date de publication et mention de la délivrance du brevet: **26.12.2018**
(21) Numéro de dépôt: 15778362.2
(22) Date de dépôt: 15.09.2015
(51) Int. Cl.: B29C 43/00, D21B 1/04, D21B 1/06, B29B 9/08, B29C 43/52, B29K 1/00, B29K 105/00

(54) **PROCÉDÉ DE PRÉPARATION D'UNE POUDRE DE MACROALGUES BRUNES ET/OU ROUGES PAR MALAXAGE ET PROCÉDÉ DE FABRICATION D'OBJETS RIGIDES A PARTIR DE LADITE POUDRE**
VERFAHREN ZUR HERSTELLUNG EINES BRAUNEN UND/ODER ROTEN MAKROALGENPULVERS DURCH MISCHEN UND VERFAHREN ZU HERSTELLUNG STARRER OBJEKTE AUS DIESEM PULVER
METHOD FOR PREPARING A POWDER OF BROWN AND/OR RED MICROALGAE BY BLENDING AND METHOD FOR PRODUCING RIGID OBJECTS FROM SAID POWDER

(30) Priorité: 23.09.2014 FR 1458981
(43) Date de publication de la demande: 02.08.2017
(73) Titulaire: Algopack, 59264 Onnaing (FR)
(72) Inventeur: LUCAS, Rémy, 44119 Treillieres (FR)
(74) Mandataire: Ermeneux, Bertrand
(86) Numéro de dépôt international: PCT/FR2015/052455
(87) Numéro de publication internationale: WO 2016/046469

(56) Documents cités:
- EP-A1- 2 489 631

## Description

### 1. Domaine de l'invention

Le domaine de l'invention est celui des matériaux renouvelables et biodégradables.

Plus précisément, l'invention concerne un procédé de préparation d'une poudre à partir de macroalgues et un procédé de fabrication d'objets rigides à partir de cette poudre.

L'invention trouve notamment une application dans la production de produits manufacturés, tels que des coques de passerelle Internet, des bouchons filetés, des pots de fleur ou des urnes funéraires.

### 2. Etat de la technique

Les macroalgues brunes, encore appelées Phéophycées, constituent la classe d'algue la plus abondante dans les eaux froides ou tempérées du globe.

Elles demeurent cependant une ressource végétale largement sous-exploitée.

Il est connu de traiter des macroalgues brunes dans le but d'extraire de l'alginate, du mannitol ou certains fucanes sulfatés contenus dans leurs parois, destinés à l'industrie agroalimentaire, à l'industrie pharmaceutique ou à l'industrie cosmétique, par exemple.

On connait également des procédés d'extraction de substances actives agissant comme produit phytosanitaire contenues dans les macroalgues brunes, telles que les laminarines.

On a par ailleurs pensé à produire du bioéthanol à partir de macroalgues brunes par fermentation bactérienne de certains sucres présents dans la paroi de ces algues.

On a également proposé, par exemple dans le document US2010/0272940, de substituer dans des produits manufacturés en plastique une partie de la matière plastique synthétique par de la matière provenant d'algues.

Cette technique de substitution connue du plastique par des algues privilégie cependant l'utilisation de microalgues qui sont notamment plus riches en cellulose que les macroalgues. Elles présentent en outre l'inconvénient de ne permettre de remplacer que partiellement de la matière plastique synthétique par de la matière algale.

Plus récemment, le déposant de la présente demande de brevet a proposé dans le document WO2014/128411 de produire des objets manufacturés à partir d'un déchet de l'industrie d'extraction des alginates ou des laminarines.

Le volume des déchets produits par les usines d'alginate et/ou de laminarine reste cependant limité et ne permet pas d'envisager une production d'objets rigides à partir de macroalgues brunes à très grande échelle.

### 1. Objectifs de l'invention

L'invention a donc notamment pour objectif de pallier les inconvénients de l'état de la technique cités ci-dessus.

Plus précisément l'invention a pour objectif de fournir une matière première totalement ou au moins majoritairement produite à partir de macroalgues brunes qui puisse être mise en oeuvre pour fabriquer des objets manufacturés rigides.

L'invention a notamment pour objectif particulier, dans un mode de réalisation particulier de l'invention, de proposer cette matière première sous forme d'une poudre de qualité constante et de propriétés homogènes.

Un objectif de l'invention est également de fournir une technique de fabrication d'objets manufacturés à partir de macroalgues brunes qui soit simple à mettre en oeuvre et fiable.

Un autre objectif de l'invention est de fournir une telle technique de fabrication qui soit d'un coût d'exploitation réduit.

Un objectif de l'invention est encore de valoriser une matière première algale prélevée en haute mer ou cultivée sur des cordages flottants.

### 2. Exposé de l'invention

Ces objectifs, ainsi que d'autres qui apparaitront par la suite sont atteints à l'aide d'un procédé de préparation d'une poudre de macroalgues brunes, destinée à la fabrication d'objets manufacturés rigides.

Dans le cadre de l'invention, on entend par l'expression "objet rigide" un objet qui ne plie pas et qui résiste aux efforts de déformation et qui en conséquence se distingue des objets souples ou flexibles.

L'invention concerne un procédé de préparation d'une poudre de macroalgues brunes et/ou rouges, destinée à la fabrication d'objets rigides, caractérisée en ce qu'il comprend les étapes suivantes dans cet ordre : - récolte desdites macroalgues brunes et/ou rouges ; - brassage sous cisaillement desdites macroalgues dans une cuve à une vitesse d'au moins 4 tours par minute, de sorte à extraire des protéines, telles que des actines, desdites macroalgues, ledit brassage sous cisaillement étant effectué au moins partiellement sous vide ; - séchage desdites macroalgues brassées, de sorte à obtenir des macroalgues brassées et séchées présentant un taux d'humidité résiduel inférieur ou égal à 45 % ; - broyage desdites macroalgues brassées et séchées, de sorte à obtenir une poudre de macroalgues.

Ainsi, de façon inédite, l'invention propose de préparer une matière première sous forme de poudre essentiellement à partir de macroalgues brunes non traitées, prélevées en haute mer ou sur l'estran ou encore cultivées sur des cordages flottants, dont la ressource est très importante.

Il convient en outre de noter que le procédé de préparation d'une poudre selon l'invention est particulièrement simple et économique.

On comprend par ailleurs aisément que la durée et la vitesse de brassage peuvent être adaptées l'une par rapport à l'autre de sorte que la distance parcourue par la matière algale pendant le brassage soit suffisante pour permettre une extraction convenable, et en quantité appropriée, des protéines contenues dans les macroalgues.

Le séchage des macroalgues brassées peut être réalisé dans un four, par exemple un four rotatif, un sécheur ou une étuve, sous pression atmosphérique ou sous vide. Le fait de maintenir la température des macroalgues brassées entre 30 et 50°C pendant l'étape de séchage est particulièrement avantageux, car ainsi on n'altère pas les propriétés des macroalgues. On notera que l'étape de séchage permet en outre une maturation des réactions biochimiques amorcées lors de l'étape de brassage.

Par ailleurs le fait d'abaisser par séchage le taux d'humidité des macroalgues brassées en dessous de 45 permet de conserver la poudre obtenue après broyage pendant plusieurs semaines à plusieurs mois, sans qu'elle se délite dans le cas d'une reprise d'humidité.

De préférence, ladite étape de séchage comprend une étape de compactage desdites macroalgues sous la forme d'une pluralité de granules de volume compris entre 0,1 et 1 cm³.

Le compactage permet en effet d'évacuer une partie de l'eau contenue dans les macroalgues brassées.

Selon un mode de réalisation particulier de l'invention, ladite étape de compactage comprend une étape d'ajout auxdits macroalgues de macroalgues traitées avec un acide faible, tel que l'acide acétique ou l'acide citrique, et/ou avec un acide dilué dans l'eau.

Dans le cadre de l'invention, on entend le terme acide faible dans son acception générale. Il s'agit donc d'un acide partiellement insoluble dans l'eau.

Les macroalgues traitées avec un acide faible et/ou avec un acide dilué dans l'eau peuvent avantageusement être un déchet industriel provenant de l'extraction des alginates et/ou des laminarines.

Avantageusement, ladite étape de brassage sous cisaillement est effectuée au moins partiellement sous vide.

On favorise ainsi la migration des protéines et, en présence d'additif, la diffusion de ces additifs dans les macroalgues.

L'étape de brassage peut notamment comprendre des phases de brassage sous vide en alternance avec des phases de brassage à pression atmosphérique.

Dans un mode de réalisation particulier de l'invention, ladite étape de brassage sous cisaillement est effectuée pendant toute sa durée sous vide.

Dans un mode de réalisation particulièrement avantageux de l'invention, ladite étape de brassage comprend une étape d'ajout auxdites macroalgues d'un additif appartenant au groupe comprenant au moins :
- eau ;
- colorant ;
- pigment coloré ;
- agent absorbant d'odeur, tel que des particules de charbon actif, de zéolithe ou de silice poreuse ;
- agent odorant, tel que la vanilline ;
- albumine.

On peut ainsi colorer les macroalgues dans la masse, supprimer ou masquer l'odeur iodée prégnante des macroalgues, qui peut être entêtante ou désagréable et augmenter la cohésion et la rigidité de la poudre grâce à l'albumine, qui permet d'obtenir des valeurs de dureté shore D comprise entre 65 et 73.

Dans d'autres modes de réalisation de l'invention, il peut également être prévu de blanchir les macroalgues en ajoutant par exemple de l'hypochlorite de sodium et/ou une enzyme lors de l'étape de brassage et, le cas échéant, un tensioactif destiné à disperser les éléments colorants naturels des macroalgues, ou chloroplastes.

De façon préférentielle, ledit colorant ou lesdits pigments colorés, ledit agent absorbant d'odeur et l'albumine sont ajoutés dans des proportions respectives de 0,05 à 0,1%, de 1 à 3,5% et/ou de 0,2 à 1%.

Dans un mode de réalisation particulier de l'invention, ladite vitesse de brassage est comprise entre 4 et 6 tours par minute.

De préférence, lors de ladite étape de brassage, on extrait au moins 2%, de préférence au moins 5%, de l'actine contenue dans lesdites macroalgues.

Ainsi, on permet la formation d'une quantité d'actine gélifiée suffisante pour permettre l'agglomération des macroalgues entre elles. En pratique, on constate que lorsque la quantité d'actine extraite est suffisante pour agglomérer les macroalgues entre elles, celles-ci restent collées aux matériaux dont la surface est de nature hydrophobe.

Avantageusement, lesdites macroalgues sont choisies parmi les algues brunes de l'ordre des laminariales ou de l'ordre des fucales.

Il peut dans certains cas s'agir d'un mélange de laminariales et/ou de fucales.

De préférence, lesdites macroalgues sont choisies parmi les espèces laminaria digitata, ascophyllum nodosum et les espèces du genre fucus.

Dans des variantes de l'invention, lesdites macroalgues peuvent être de l'espèce laminaria sacchoriza ou laminaria hyperborea ou du genre lessonia.

Selon un aspect particulier de l'invention, le taux d'humidité résiduel de la poudre est supérieur ou égal à 7%.

Les inventeurs ont en effet constaté qu'un taux d'humidité résiduel au moins égal à 7% confère de la fluidité à la matière constitutive de la poudre ce qui améliore sa capacité à être mise en forme.

Dans un mode de réalisation particulier de l'invention, le taux d'humidité résiduel de ladite poudre est compris entre 26 et 45%.

Dans au moins un mode de réalisation particulier de l'invention, la densité de ladite poudre est comprise entre 0,4 et 0,8.

On obtient ainsi une matière légère.

L'invention concerne aussi un procédé de fabrication d'un objet rigide au moins partiellement à partir de macroalgues brunes, caractérisée en ce qu'il comprend les étapes suivantes : - brassage sous cisaillement desdites macroalgues dans une cuve à une vitesse d'au moins 4 tours par minute, de sorte à extraire des protéines, telles que des actines, desdites macroalgues, ledit brassage sous cisaillement étant effectué au moins partiellement sous vide ; - séchage desdites macroalgues brassées, de sorte à obtenir des macroalgues brassées et séchées présentant un taux d'humidité résiduel inférieur ou égal à 45 % ; - broyage desdites macroalgues brassées et séchées, de sorte à obtenir une poudre de macroalgues ; -thermo-compression de ladite poudre dans un moule, ladite poudre étant portée à une température comprise entre 50 et 100°C, de préférence entre 60 et 100°C, et soumise à une pression comprise entre 150 et 4000 bars pendant 50 secondes à 45 minutes.

L'invention propose ainsi, de façon astucieuse, de former des objets rigides à partir de poudre d'algues compactée, ce qui est particulièrement simple et efficace. Notamment, grâce à l'humidité présente dans la poudre, les particules de poudres peuvent s'agglomérer de façon fluide et homogène et se lier solidement entre elles.

Il convient de noter que la température, la pression et la durée d'application de cette dernière peuvent être optimisées en fonction de l'épaisseur et de la taille de l'objet fabriqué.

Dans au moins un mode de réalisation avantageux de l'invention, le procédé de fabrication décrit ci-dessus comprend une étape d'application au moins partielle d'une laque hydrofuge sur la surface de la poudre thermo-compressée.

On protège ainsi le corps de l'objet d'une reprise d'humidité.

### 3. Liste des figures

D'autres caractéristiques et avantages de l'invention apparaitront plus clairement à la lecture de la description suivante d'un mode de réalisation de l'invention, donné à titre de simple exemple illustratif et non limitatif, et des dessins annexés parmi lesquels :
- la figure 1 est une représentation synoptique sous forme de diagramme des étapes d'un exemple de procédé de préparation d'une poudre à partir de macroalgues brunes selon l'invention ;
- la figure 2 est une vue d'une poudre obtenue par le procédé de préparation présenté en référence à la figure 1 ;
- la figure 3 présente un presse de thermocompression utilisée pour former une urne funéraire à partir de poudre de macroalgues brunes ;
- la figure 4 est une vue schématique d'une demi-coque d'une urne funéraire fabriquée en thermo-compressant une poudre de macroalgues brunes à l'aide de la presse présentée en référence à la figure 3.

### 4. Description d'un exemple détaillé de l'invention

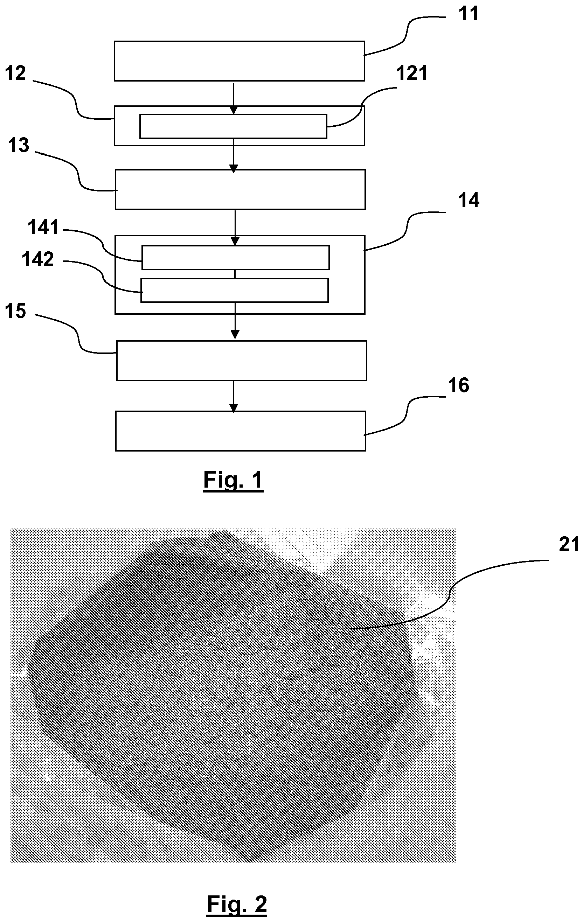

On a représenté sous forme de schéma-bloc, en figure 1, les étapes d'un exemple de procédé de préparation d'une poudre destinée à la fabrication d'objets manufacturés rigides, à partir d'un mélange de laminaria digitata et d'ascophyllum nodosum, encore appelé goémon noir.

Dans d'autres modes de réalisation de l'invention, il peut être envisagé de préparer une poudre uniquement à partir de laminaria digitata ou d'ascophyllum nodosum ou de tout autre genre d'algue brune seul ou en mélange.

Après récolte des laminaria digitata et des ascophyllum nodosum en haute mer, celles-ci sont transformées sur une ligne de production d'une usine de préparation de poudre, où elles sont dans une première étape lavées pour ôter le sable et les coquillages enchevêtrés dans les thalles d'algues (étape 11).

On verse ensuite environ 70% en poids de laminaria digitata et 30% en poids d'ascophyllum nodosum dans une cuve de malaxage, dans laquelle elles sont brassées sous cisaillement et sous vide continu pendant 14 heures à une vitesse de 6 tours par minutes (étape 12). Lors de cette étape de brassage 12, on ajoute progressivement, lors d'une étape 121, 0,03% en masse, rapportée à la masse totale de macroalgues, d'un colorant naturel et 1,2% en masse, rapportée à la masse totale des macroalgues, de fines de charbon actif pour masquer l'odeur qui émane de celles-ci.

A l'issue de l'étape 12, on obtient un bloc de macroalgues dont l'aspect révèle qu'elles sont agglomérées entre elles par un gel d'actine.

On ajoute ensuite aux macroalgues extraites de la cuve de malaxage 8% en masse d'un déchet obtenu auprès d'une usine de production d'alginates, constitué d'un résidu de macroalgues brunes traitées à l'acide faible desquelles on a extrait des alginates (étape 13).

Dans une étape 14, on mélange les macroalgues extraites de la cuve de malaxage et les macroalgues traitées à l'acide faible à l'aide d'une vis sans fin (étape 141) et on compacte ce mélange dans une presse à granules à matrice annulaire, sous forme de granules sensiblement cylindriques de 6 millimètres environ et de 10 à 20 millimètres de hauteur (étape 142).

Dans une variante de ce mode de réalisation particulier de l'invention, les macroalgues extraites de la cuve de malaxage peuvent être directement compactées sous forme de granules, sans y ajouter de macroalgues traitées à l'acide faible.

Les granules ainsi obtenues sont ensuite séchées dans un tunnel de séchage à chauffage par induction, ou par fluide caloporteur, pendant 6 heures sous une température de 46°C (étape 15).

Dans des variantes de ce mode de réalisation particulier de l'invention, il peut être prévu de sécher les granules pendant 1 à 15 heures selon que l'on utilise un mode de séchage statique ou dynamique.

À la sortie du tunnel de séchage, les granules séchées sont transportées par un convoyeur à bande vers un broyeur à marteaux dans lequel les granules sont broyées sous la forme d'une poudre de granulométrie égale à 1±0,3mm (étape 16). La figure 2 est une vue de dessus d'un sachet ouvert de poudre 21 obtenue par le procédé de préparation selon l'invention.

Chaque ligne de production de l'usine permet ainsi de préparer en continu environ 3 tonnes de poudre par heure, à un coût intéressant.

On note que dans ce mode de réalisation particulier de l'invention le taux d'humidité résiduel de la poudre est d'environ 39%.

La poudre ainsi obtenue est directement utilisable pour fabriquer des objets manufacturés.

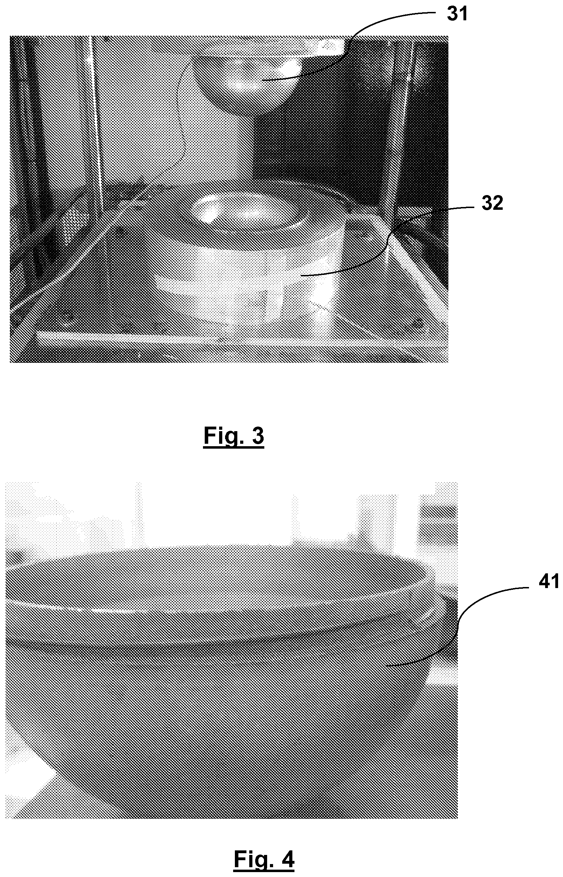

On a illustré sur la figure 3 une presse de thermocompression 31 développant une pression de 300 kg/cm² permettant de fabriquer des demi-coques d'urne funéraire sensiblement demi-sphériques de 180 mm de diamètre à partir d'une poudre de macroalgues brunes.

Comme on peut le voir sur la figure 3, la presse 31 présente une tête de piston équipée d'une empreinte chauffée à 98°C par induction. Par souci de maitrise du process de fabrication la température de l'empreinte du piston est régulée.

La poudre est dosée automatique par un débit d'aspiration dans le moule inférieur 32 porté à une température régulée maximale de 98°C.

Dans cet exemple, on dose 500g de poudre dans le moule et on exerce sur la poudre une force de 12,5 tonnes avec la tête de piston pendant un temps de cycle de 45 minutes, de sorte à porter la température de la poudre à environ 70°C.

On obtient une demi-urne funéraire 41 d'une masse d'environ 490g et d'une densité de 1,58, illustrée de façon schématique sur la figure 4 dans une vue en perspective.

On pulvérise ensuite une laque hydrofuge sur la surface de la demi-urne funéraire afin de la rendre insensible à l'humidité.

Dans une étape suivante, la surface de l'urne est décorée par tampographie ou par impression numérique.

On note qu'avantageusement, lors de l'utilisation d'un outillage à empreinte, la température des empreintes est choisie entre 75 et 110°C.

## Revendications

1. Procédé de préparation d'une poudre de macroalgues brunes et/ou rouges, destinée à la fabrication d'objets rigides, **caractérisée en ce qu'**il comprend les étapes suivantes dans cet ordre :
- récolte desdites macroalgues brunes et/ou rouges ;
- brassage sous cisaillement desdites macroalgues dans une cuve à une vitesse d'au moins 4 tours par minute, de sorte à extraire des protéines, telles que des actines, desdites macroalgues, ledit brassage sous cisaillement étant effectué au moins partiellement sous vide ;
- séchage desdites macroalgues brassées, de sorte à obtenir des macroalgues brassées et séchées présentant un taux d'humidité résiduel inférieur ou égal à 45 % ;
- broyage desdites macroalgues brassées et séchées, de sorte à obtenir une poudre de macroalgues.

2. Procédé de préparation d'une poudre de macroalgues brunes et/ou rouges selon la revendication 1, **caractérisé en ce que**, lors de ladite étape de séchage, la température de séchage desdites macroalgues brassées est comprise entre 30 et 50°C, de préférence entre 30 et 45°C.

3. Procédé de préparation d'une poudre de macroalgues brunes et/ou rouges selon l'une quelconque des revendications 1 et 2, **caractérisé en ce que** la durée de brassage sous cisaillement desdites macroalgues est comprise entre 6 et 24 heures.

4. Procédé de préparation d'une poudre de macroalgues brunes et/ou rouges selon l'une quelconque des revendications 1 à 3, **caractérisé en ce que** les particules de ladite poudre de macroalgues présentent un diamètre équivalent inférieur ou égal à 1,5 millimètre.

5. Procédé de préparation d'une poudre de macroalgues brunes et/ou rouges selon l'une quelconque des revendications 1 à 4, **caractérisé en ce que** ladite étape de séchage comprend une étape de compactage desdites macroalgues sous la forme d'une pluralité de granules de volume compris entre 0,1 et 1 cm³.

6. Procédé de préparation d'une poudre de macroalgues brunes et/ou rouges selon la revendication 5, **caractérisé en ce que** ladite étape de compactage comprend une étape d'ajout auxdits macroalgues de macroalgues traitées avec un acide faible et/ou avec un acide dilué dans l'eau.

7. Procédé de préparation d'une poudre de macroalgues brunes et/ou rouges selon la revendication 1, **caractérisé en ce que** ladite étape de brassage sous cisaillement est effectuée pendant toute sa durée sous vide.

8. Procédé de préparation d'une poudre de macroalgues brunes et/ou rouges selon l'une quelconque des revendications 1 à 7, **caractérisé en ce que** ladite étape de brassage comprend une étape d'ajout auxdites macroalgues d'un additif appartenant au groupe comprenant au moins :
- eau ;
- colorant ;
- pigment coloré ;
- agent absorbant d'odeur, tel que du charbon actif ;
- agent odorant ;
- albumine.

9. Procédé de préparation d'une poudre de macroalgues brunes et/ou rouges selon la revendication 8, **caractérisé en ce que** ledit colorant ou lesdits pigments colorés, ledit agent absorbant d'odeur et l'albumine sont ajoutés dans des proportions respectives de 0,05 à 0,1%, de 1 à 3,5% et/ou de 0,2 à 1%.

10. Procédé de préparation d'une poudre de macroalgues brunes et/ou rouges selon l'une quelconque des revendications 1 à 9, **caractérisé en ce que** ladite vitesse de brassage est comprise entre 4 et 6 tours par minute.

11. Procédé de préparation d'une poudre de macroalgues brunes et/ou rouges selon l'une quelconque des revendications 1 à 10, **caractérisé en ce que** lors de ladite étape de brassage, on extrait au moins 2%, de préférence au moins 5%, de l'actine contenue dans lesdites macroalgues.

12. Procédé de préparation d'une poudre de macroalgues brunes et/ou rouges selon l'une quelconque des revendications 1 à 11, **caractérisé en ce que** lesdites macroalgues brunes sont choisies parmi les algues brunes de l'ordre des laminariales ou de l'ordre des fucales.

13. Procédé de préparation d'une poudre de macroalgues brunes et/ou rouges selon la revendication 12, **caractérisé en ce que** lesdites macroalgues brunes sont choisies parmi les espèces laminaria digitata, ascophyllum nodosum et les espèces du genre fucus.

14. Procédé de préparation d'une poudre de macroalgues brunes et/ou rouges selon l'une quelconque des revendications 1 à 13, **caractérisé en ce que** le taux d'humidité résiduel de ladite poudre est supérieur ou égal à 7%.

15. Procédé de fabrication d'un objet rigide au moins partiellement à partir de macroalgues brunes, **caractérisé en ce qu'**il comprend les étapes suivantes :
- brassage sous cisaillement desdites macroalgues dans une cuve à une vitesse d'au moins 4 tours par minute, de sorte à extraire des protéines, telles que des actines, desdites macroalgues, ledit brassage sous cisaillement étant effectué au moins partiellement sous vide ;
- séchage desdites macroalgues brassées, de sorte à obtenir des macroalgues brassées et séchées présentant un taux d'humidité résiduel inférieur ou égal à 45 % ;
- broyage desdites macroalgues brassées et séchées, de sorte à obtenir une poudre de macroalgues ;
- thermo-compression de ladite poudre dans un moule, ladite poudre étant portée à une température comprise entre 50 et 100°C, de préférence entre 60 et 100°C, et soumise à une pression comprise entre 150 et 4000 bars pendant 50 secondes à 45 minutes.

16. Procédé de fabrication d'un objet rigide selon la revendication 15, **caractérisé en ce qu'**il comprend une étape d'application au moins partielle d'une laque hydrofuge sur la surface de la poudre thermo-compressée.

## Patentansprüche

1. Verfahren zur Herstellung eines Pulvers von braunen und/oder roten Makroalgen, das für die Herstellung von starren Gegenständen bestimmt ist, **dadurch gekennzeichnet, dass** es die folgenden Schritte in dieser Reihenfolge umfasst:
- Sammeln der braunen und/oder roten Mikroalgen;
- Vermischen unter Scherung der Makroalgen in einer Wanne mit einer Geschwindigkeit von mindestens 4 Umdrehungen pro Minute, um Proteine, wie Actine, aus den Makroalgen zu extrahieren, wobei das Vermischen unter Scherung zumindest teilweise unter Vakuum erfolgt;
- Trocknen der vermischten Makroalgen, um vermischte und getrocknete Makroalgen zu erhalten, die eine Restfeuchtigkeitsrate kleiner oder gleich 45 % aufweisen;
- Zerkleinern der vermischten und getrockneten Makroalgen, um ein Pulver von Makroalgen zu erhalten.

2. Verfahren zur Herstellung eines Pulvers von braunen und/oder roten Makroalgen nach Anspruch 1, **dadurch gekennzeichnet, dass** bei dem Trocknungsschritt die Trocknungstemperatur der vermischten Makroalgen zwischen 30 und 50 °C, vorzugsweise zwischen 30 und 45 °C, beträgt.

3. Verfahren zur Herstellung eines Pulvers von braunen und/oder roten Makroalgen nach einem der Ansprüche 1 und 2, **dadurch gekennzeichnet, dass** die Dauer des Vermischens unter Scherung der Makroalgen zwischen 6 und 24 Stunden beträgt.

4. Verfahren zur Herstellung eines Pulvers von braunen und/oder roten Makroalgen nach einem der Ansprüche 1 bis 3, **dadurch gekennzeichnet, dass** die Partikel des Makroalgenpulvers einen äquivalenten Durchmesser kleiner oder gleich 1,5 Millimeter aufweisen.

5. Verfahren zur Herstellung eines Pulvers von braunen und/oder roten Makroalgen nach einem der Ansprüche 1 bis 4, **dadurch gekennzeichnet, dass** der Trocknungsschritt einen Schritt der Verdichtung der Makroalgen in Form einer Vielzahl von Körnern mit einem Volumen zwischen 0,1 und 1 cm³ umfasst.

6. Verfahren zur Herstellung eines Pulvers von braunen und/oder roten Makroalgen nach Anspruch 5, **dadurch gekennzeichnet, dass** der Verdichtungsschritt einen Schritt der Hinzufügung von Makroalgen, die mit einer schwachen Säure und/oder mit einer in Wasser verdünnten Säure behandelt wurden, zu den Makroalgen umfasst.

7. Verfahren zur Herstellung eines Pulvers von braunen und/oder roten Makroalgen nach Anspruch 1, **dadurch gekennzeichnet, dass** der Schritt des Vermischens unter Scherung während seiner gesamten Dauer unter Vakuum durchgeführt wird.

8. Verfahren zur Herstellung eines Pulvers von braunen und/oder roten Makroalgen nach einem der Ansprüche 1 bis 7, **dadurch gekennzeichnet, dass** der Schritt des Vermischens einen Schritt der Hinzufügung eines Zusatzstoffes zu den Makroalgen umfasst, der der Gruppe angehört, die mindestens umfasst:
- Wasser;
- Farbstoff;
- Farbpigment;
- Geruch neutralisierendes Mittel, wie Aktivkohle;
- Duftmittel;
- Albumin.

9. Verfahren zur Herstellung eines Pulvers von braunen und/oder roten Makroalgen nach Anspruch 8, **dadurch gekennzeichnet, dass** der Farbstoff oder die Farbpigmente, das Geruch neutralisierende Mittel und das Albumin in jeweiligen Anteilen von 0,05 bis 0,1 %, von 1 bis 3,5 % und/oder von 0,2 bis 1 % hinzugefügt werden.

10. Verfahren zur Herstellung eines Pulvers von braunen und/oder roten Makroalgen nach einem der Ansprüche 1 bis 9, **dadurch gekennzeichnet, dass** die Geschwindigkeit des Vermischens zwischen 4 und 6 Umdrehungen pro Minute beträgt.

11. Verfahren zur Herstellung eines Pulvers von braunen und/oder roten Makroalgen nach einem der Ansprüche 1 bis 10, **dadurch gekennzeichnet, dass** bei dem Schritt des Vermischens mindestens 2 %, vorzugsweise mindestens 5 %, des in den Makroalgen enthaltenen Actins extrahiert werden.

12. Verfahren zur Herstellung eines Pulvers von braunen und/oder roten Makroalgen nach einem der Ansprüche 1 bis 11, **dadurch gekennzeichnet, dass** die braunen Mikroalgen unter den Braunalgen der Arten der Laminariales oder der Fucales ausgewählt sind.

13. Verfahren zur Herstellung eines Pulvers von braunen und/oder roten Makroalgen nach Anspruch 12, **dadurch gekennzeichnet, dass** die braunen Makroalgen unter den Gattungen Laminaria digitata, Ascophyllum nodosum und den Gattungen der Art Fucus ausgewählt sind.

14. Verfahren zur Herstellung eines Pulvers von braunen und/oder roten Makroalgen nach einem der Ansprüche 1 bis 13, **dadurch gekennzeichnet, dass** die Restfeuchtigkeitsrate des Pulvers größer oder gleich 7 % ist.

15. Verfahren zur Herstellung eines starren Gegenstandes zumindest teilweise aus braunen Makroalgen, **dadurch gekennzeichnet, dass** es die folgenden Schritte umfasst:
- Vermischen unter Scherung der Makroalgen in einer Wanne mit einer Geschwindigkeit von mindestens 4 Umdrehungen pro Minute, um Proteine, wie Actine, aus den Makroalgen zu extrahieren, wobei das Vermischen unter Scherung zumindest teilweise unter Vakuum durchgeführt wird;
- Trocknen der vermischten Makroalgen, um vermischte und getrocknete Makroalgen zu erhalten, die eine Restfeuchtigkeitsrate kleiner oder gleich 45 % aufweisen;
- Zerkleinern der vermischten und getrockneten Makroalgen, um ein Pulver von Makroalgen zu erhalten.
- Thermokompression des Pulvers in einer Form, wobei das Pulver auf eine Temperatur zwischen 50 und 100 °C, vorzugsweise zwischen 60 und 100 °C, gebracht wird und einem Druck zwischen 150 und 4000 bar während 50 Sekunden bis 45 Minuten ausgesetzt wird.

16. Verfahren zur Herstellung eines Gegenstandes nach Anspruch 15, **dadurch gekennzeichnet, dass** es einen Schritt des zumindest teilweisen Aufbringens eines wasserabweisenden Lacks auf die Oberfläche des thermokomprimierten Pulvers umfasst.

## Claims

1. A method for preparing a powder of brown and/or red macroalgae, for the manufacture of rigid objects, **characterised in that** it comprises the following steps in that order:
- harvesting said brown and/or red macroalgae;
- shear stirring said macroalgae in a tank a rate of at least 4 rpm, so as to extract proteins, such as actin, from said macroalgae, wherein said shear stirring is carried out at least partially under vacuum;
- drying said stirred macroalgae, so as to obtain stirred and dried macroalgae having a residual moisture content smaller than or equal to 45%;
- grinding said stirred and dried macroalgae, so as to obtain a powder of macroalgae.

2. The method for preparing a powder of brown and/or red macroalgae according to claim 1, **characterised in that**, during said drying step, the drying temperature of said stirred macroalgae ranges between 30 and 50°C, preferably between 30 and 45°C.

3. The method for preparing a powder of brown and/or red macroalgae according to any of the claims 1 and 2, **characterised in that** the shear stirring time of said macroalgae ranges between 6 and 24 hours.

4. The method for preparing a powder of brown and/or red macroalgae according to any of the claims 1 to 3, **characterised in that** the particles of said powder of macroalgae have an equivalent diameter smaller than or equal to 1.5 millimetres.

5. The method for reparing a powder of brown and/or red macroalgae according to any of the claims 1 to 4, **characterised in that** said drying step comprises a step of compacting said macroalgae in the form of a plurality of granules of volume between 0.1 and 1 cm³.

6. The method for preparing a powder of brown and/or red macroalgae according to claim 5, **characterised in that** said compaction step comprises a step of adding to said macroalgae, macroalgae treated with a weak acid, such as acetic acid or citric acid and/or with an acid diluted in water.

7. The method for preparing a powder of brown and/or red macroalgae according to claim 1, **characterised in that** said step of shear stirring is carried out under vacuum throughout its duration.

8. The method for preparing a powder of brown and/or red macroalgae according to any of the claims 1 to 7, **characterised in that** said step of stirring comprises a step of adding to said macroalgae an additive belonging to the group comprising at least:
- water;
- a dye:
- a coloured pigment;
- an odour absorbent, such as activated carbon;
- an odorant agent;
- albumin.

9. The method for preparing a powder of brown and/or red macroalgae according to claim 8, **characterised in that** said dye or said coloured pigments, said odour absorbent and albumin are added in respective proportions of 0.05 to 0.1%, 1 to 3.5% and/or 0.2 to 1%.

10. The method for preparing a powder of brown and/or red macroalgae according to any of the claims 1 to 9, **characterised in that** said stirring rate ranges between 4 and 6 rotations per minute.

11. The method for preparing a powder of brown and/or red macroalgae according to any of the claims 1 to 10, **characterised in that**, in said stirring step, at least 2%, preferably at least 5% actin contained in said macroalgae, are extracted.

12. The method for preparing a powder of brown and/or red macroalgae according to any of the claims 1 to 11, **characterised in that** said brown macroalgae are chosen from brown algae of the order laminariales or of the order fucales.

13. The method for preparing a powder of brown and/or red macroalgae according to claim 12, **characterised in that** said brown macroalgae are selected from the laminaria digitata, ascophyllum nodosum species and the genus fucus species.

14. The method of preparing a powder of brown and/or red macroalgae according to any of the claims 1 to 13, **characterised in that** the residual moisture content of said powder is greater than or equal to 7%.

15. A method of manufacturing a rigid object at least partially from brown macroalgae, **characterised in that** it comprises the following steps:
- shear stirring said macroalgae in a tank a rate of at least 4 rpm, so as to extract proteins, such as actin, from said macroalgae, wherein said shear stirring is carried out at least partially under vacuum;
- drying said stirred macroalgae; so as to obtain stirred and dried macroalgae having a residual moisture content smaller than or equal to 45%;
- grinding said stirred and dried macroalgae, so as to obtain a powder of macroalgae;
- thermo-compression of said powder in a mould, said powder being brought to a temperature between 50 and 100°C, preferably between 60 and 100°C and subjected to a pressure of between 150 and 4000 bars for 50 seconds to 45 minutes.

16. The method for manufacturing a rigid object according to claim 15, **characterised in that** it comprises at least one partial step of applying a water-repellent lacquer on the surface of the thermo-compressed powder.
